# EUROPEAN PATENT SPECIFICATION

(11) **EP 1 883 148 B1**
(45) Date of publication and mention of the grant of the patent: **18.06.2008**
(21) Application number: 06117849.7
(22) Date of filing: 26.07.2006
(51) Int. Cl.: H02K 7/118, F04D 13/02

(54) **Rotary pump with synchronous motor and viscous coupling**
Rotationspumpe getrieben durch einen Synchronmotor mit einer Flüssigkeitsreibungskupplung
Pompe rotative avec moteur synchrone et accouplement visqueux

(43) Date of publication of application: 30.01.2008
(73) Proprietor: Electrolux Home Products Corporation N.V., 1930 Zaventem (BE)
(72) Inventor: Zanello, Fabio, 33170, PORDENONE (IT); Furlan, Luca, 33170, PORDENONE (IT)
(74) Representative: Giugni, Valter

(56) References cited:
- EP-A- 1 428 926
- EP-A- 1 553 681
- EP-A2- 0 641 947
- WO-A-00/05799
- FR-A1- 2 752 028

## Description

The present invention refers to an improved kind of rotary pump driven by an electric motor, which is particularly adapted to avoid problems due to beating or rattling noise, uncertain or unreliable operation, and the like, especially when used in particular applications.

Although the inventive pump is particularly adapted for use in electric household appliances, it is to be understood that the invention may be equally well and effectively used in a number of different applications of a general kind.

It is in fact generally known that, during the discharge phases provided to let out the washing or rinsing liquor from clothes washing machines or dishwashing machines, the drain manifold - which is usually placed under the bottom of the tub or vessel containing the items to be washed - is filled with the liquor flowing in from the tub or vessel and, from such manifold, the same liquor is then ejected by the action of a suitable pump, whose impeller is situated within the same manifold.

The motor used to drive the pump is usually an electric motor of the asynchronous type. The mode of operation of such motors is well known in the art and does generally not give rise to any particular problem either in the starting phase or in the final discharge phase, in which the running out of the liquor being discharged causes in fact a reduced amount of water to come in contact with the impeller together with parts of air taken in from inside the vessel or tub through the drain manifold.

Asynchronous motors, however, are generally known to be rather expensive owing to the considerable amount of copper and ferromagnetic material required in the construction thereof.

In view of reducing the overall costs deriving from the use of such asynchronous motors, use is therefore increasingly made of appropriate synchronous motors, which are largely known to be far more inexpensive, while being able to perform the same functions as the asynchronous ones in the particular applications, without giving rise to any serious drawback.

These synchronous motors, however, require that - during the starting phase - a resisting torque be created on the motor shaft to enable rotation of the same motor to be triggered, actually. Such resisting torque shall on the one side be rather modest, in order to avoid stalling the rotary motion of the shaft; on the other side, it should however not be too low, since this would put at risk the possibility for said rotation to be triggered.

The ways and means for creating such resisting torque are described in the European patent application No. 03023702.8.

Described in the above-cited publication there are some solutions aimed at improving the characteristics of a pump driven by a synchronous motor; in particular, disclosed in the above-cited patent application is an invention which, through the use of a flywheel applied on to the drive shaft of the pump, is effective in reducing the undesired rattling, i.e. beating brought about by a portion of the rotatably driving shaft striking against a corresponding portion of the impeller. However, it has been found that - under particular conditions, or when the synchronous motor is required to ensure a significant power output - the proposed flywheel-based solution still proves inadequate, since the pump exhibits again the problem of an unacceptable noise level.

From FR 2752028 it is divulged a kind of hydraulic coupling between a rotating shaft and an impeller; however, even if effective and using a visco-static means, said solution shows burdensome in some as the hydraulic coupling extends well outside the impeller hub, and precisely on the backside of the impeller blades, what limit the blades overall area extension.

From WO00/05799 it is divulged a kind of electric motor with a permanent -magnet rotor having a viscous coupling to the shaft and is contained in an hermetic casing. However in this case the interposed viscous liquid is used to drive the shaft only to which the impeller is connected. There is no specific provision of viscous between said impeller and the shaft. So the advantages of a viscous coupling between shaft and impeller are missed.

From EP 1428926 it is known a drain pump comprising a synchronous motor and an impeller; the motor shaft is provided with an eccentric protrusion at its extremity, and said impeller is fitted onto said shaft and is provided with a ring-shaped cavity extending circularly only along a definite arc portion and adapted to accumulate said eccentric protrusion. This solution however has proved that, even if it can reduce the impingements, and the related noise, between the ring-shaped cavity and shaft protrusion, in any case it is always based on a mechanical coupling between two coaxially rotating items which have to be periodically separated from each other; therefore the undesired rattling noise is never fully eliminated.

It would therefore be desirable, and it is actually a main purpose of the present invention, to provide a rotary pump, in particular such a rotary pump driven by a synchronous motor, and used in particular as a discharge pump in clothes washing machines and dishwashing machines, which is effective in doing completely away with the problem of the noise generated in the coupling between the motor shaft and the pump impeller.

According to the present invention, this aim is reached in a rotary pump, in particular driven by a synchronous motor, incorporating the features as defined and recited in the appended claims.

Advantages and features of the present invention will anyway be more readily understood from the description that is given below by way of nonlimiting example with reference to the accompanying drawings, in which:
- Figure 1 is a conceptual, exploded view of the assembly and arrangement of the basic part of a rotary pump according to the prior art , and useful for understading the invention.
- Figure 2 is a cross-sectional view of the coupling of an impeller with the respective drive motor according to the present invention;
- Figures 3 and 4 are respective perspective and partially cross-sectional views of the shaf-to-impeller coupling in the pump shown in Figure 2.

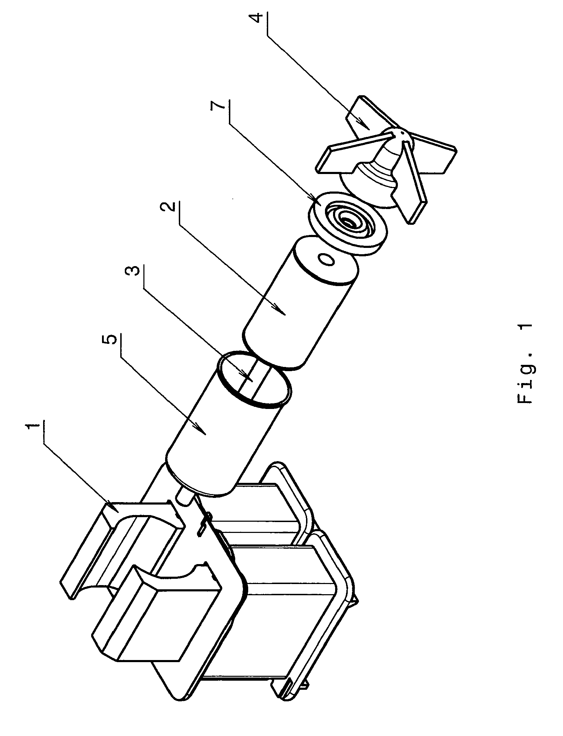

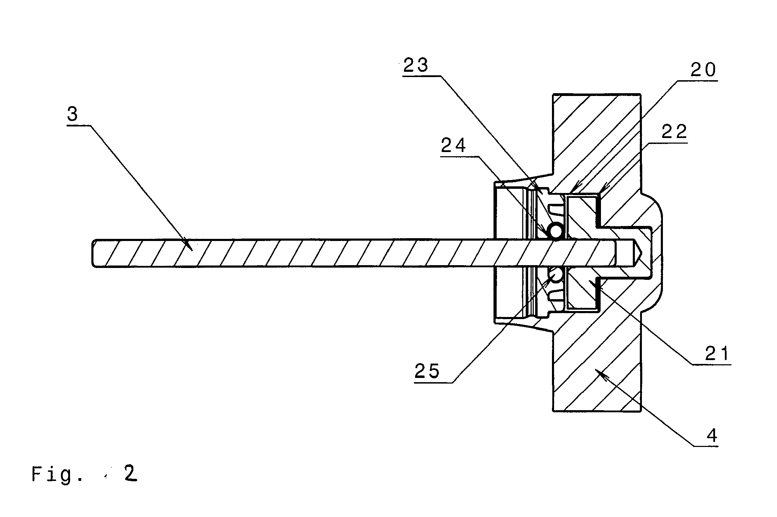

With reference to Figure 1 and Figures 2 through to 4, these latter illustrating an embodiment of the present invention, in a rotary pump according to the present invention there is provided an electric motor comprising a stator. 1, a related rotor 3 and a rotating shaft 3.

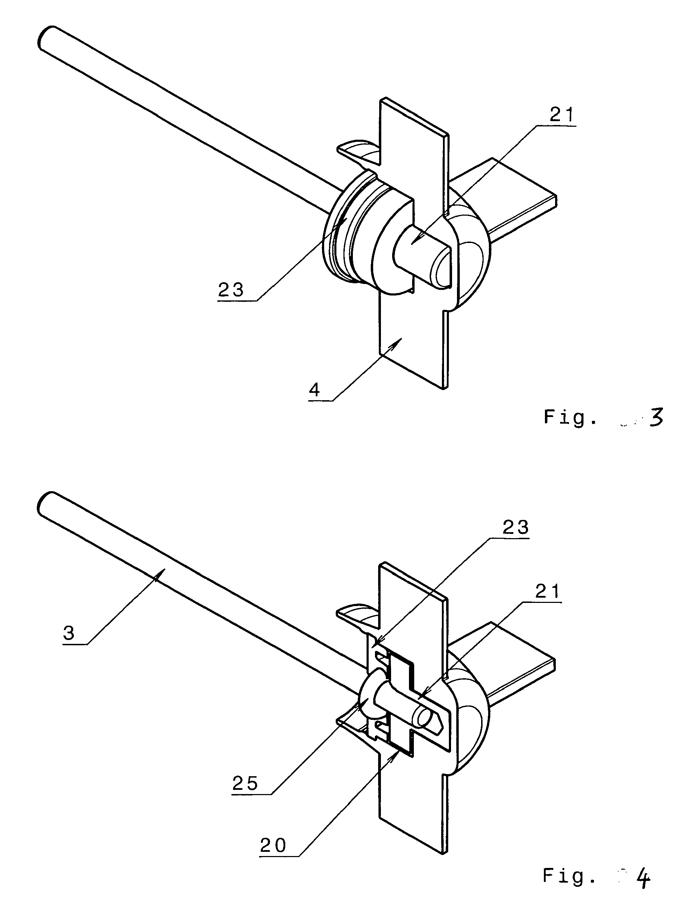

With reference to Figures 2 to 4 the impeller 4 is provided - on the side thereof facing the shaft 3 - with a substantially cylindrical recess 20. The shaft 3 is in turn provided - at the end portion thereof facing said impeller - with a guide member 21, which is so sized as to be able to be received and accommodated within said recess 20.

Even in this case the recess 20 and the guide member 21 are so mutually shaped and sized as to ensure that a narrow hollow gap or clearance 22 is created between these two parts for a visco-static fluid to be capable of being filled thereinto.

Such recess 20 is then sealed by means of a closing member 23, which is most obviously provided with a related aperture 24 enabling said shaft 3 to extend through said closing member 23.

The above-mentioned aperture 24 is then completed with the addition of a sealing gasket of the O-ring type 25, which must enable the shaft to rotatably slide in said aperture 24.

The shaft 3 can and must rotate within said aperture 24; at least during the initial rotation phase, i.e. until the impeller eventually rotates at substantially the same speed as the shaft. In fact, the impeller is motionless at the beginning, while showing a modest, albeit perceptible resisting torque, wheres the shaft, with its guide member 21, has already started to rotate, bust has not started to rotatably drive the impeller yet, since the visco-static fluid has not reached up to an adequate viscosity yet.

When the parts of the coupling of the invention are assembled, the clearance between the recess 20 and the guide member 21 is filled with a fluid having visco-static properties, i.e. in particular that property by virtue of which the same fluid - when mixed, stirred or , anyway, processed - increases its viscosity.

Fluids of this type are known as silicone or elasto-hydrodynamic fluids; they are generally and readily available on the market, where they are supplied for instance by such companies as TECHNOLUBE SEAL.

In particular, it has been found that, for water moving pumps of the type and for the applications considered in this specification, fluids having a viscosity level ranging from 350 CTS to 5000 CTS - depending on the actual type of pump and the frequency of the power supply - voltage may be regarded as being suitable.

It will of course be readily appreciated that - for the above-noted kind of applications and uses - the ideal motor on which the present invention may be implemented is the synchronous one, which in fact has no electric connections on the rotor.

## Claims

1. A rotary pump comprising:
- an electric motor comprising a stator (1) and a related rotor (2),
- first means adapted to enable said rotor (2) to engage a rotating shaft (3),
- second means adapted to enable an end portion of said rotating shaft to engage an impeller (4), **characterized in that**:
said second means are comprised of a coupling of the visco-static type that used a bath of an appropriate medium having visco-static properties, said second means comprising:
- a containment hollow member in the form of a substantially sealed and cylindrical recess (20), which is an integral part of said impeller (4), said recess (20) being placed in the hub of said impeller (4), and opened at the side of the impeller facing the rotating shaft (3), in order ro receive the rotating shaft (3),
- a driving or guide member (21), rigidly connected to the end portion of said shaft (3), and slightingly lodged inside said cylindrical recess (20),
- a closing member (23) able to solidly close the opening of said cylindrical recess (20), and provided with a through-hole (24) able to be passed by said rotating shaft (3) rotating with respect to said closing member (23),
- are further containing a bath of a visco-static medium injected into the clearance (22) provided between said driving or guide member (21) and said cylindrical recess (20).

2. Rotary pump according to claim 1, **characterized in that** a sealing means, preferably an O-Ring (25), adapted to allow the rotation of said rotating shaft (3) with respect to said closing member (23), is arranged inside said through-hole (24).

3. Rotary pump according to any of the preceding claims, **characterized in that** said coupling of the visco-static type comprises media, preferably silicone oils or, anyway, fluids having definite elasto-hydrodynamic properties, adapted to automatically increase their viscosity when the surfaces in contact with such media are set in motion relative to each other or change their own temperature.

## Patentansprüche

1. Kreiselpumpe, umfassend:
- einen Elektromotor, der einen Stator (1) und einen zugehörigen Rotor (2) umfasst,
- erste Mittel, die dafür geeignet sind, den Rotor (2) mit einer Drehwelle (3) in Eingriff kommen zu lassen (3),
- zweite Mittel, die dafür geeignet sind, einen Endteil der Drehwelle mit einem Laufrad (4) in Eingriff kommen zu lassen, **dadurch gekennzeichnet dass**:
die zweiten Mittel aus einer Kupplung des viskostatischen Typs bestehen, die ein Bad aus einem geeigneten Medium mit viskostatischen Eigenschaften verwendet, wobei die zweiten Mittel umfassen:
- ein hohles Aufnahmeelement in Form einer im wesentlichen verschlossenen und zylindrischen Aussparung (20), die ein integraler Bestandteil des Laufrades (4) ist, wobei diese Aussparung (20) in der Nabe des Laufrades (4) angeordnet ist und auf der Seite des Laufrades, welche der Drehwelle (3) zugewandt ist, geöffnet ist, um die Drehwelle (3) aufzunehmen,
- ein Antriebs- oder Führungselement (21), das starr mit dem Endteil der Welle (3) verbunden ist und gleitend im Innern der zylindrischen Aussparung (20) gelagert ist,
- ein Verschlusselement (23), das die öffnung der zylindrischen Aussparung (20) fest verschließen kann und mit einer Durchgangsbohrung (24) versehen ist, die von der sich in Bezug auf das Verschlusselement (23) drehenden Drehwelle (3) durchlaufen werden kann,
- und des Weiteren ein Bad aus einem viskostatischen Medium enthalten, das in den Zwischenraum (22), der zwischen dem Antriebs- oder Führungselement (21) und der zylindrischen Aussparung (20) vorgesehen ist, eingespritzt wurde.

2. Kreiselpumpe nach Anspruch 1, **dadurch gekennzeichnet, dass** ein Dichtungsmittel, vorzugsweise ein O-Ring (25), das dafür ausgelegt ist, die Drehung der Drehwelle (3) in Bezug auf das Verschlusselement (23) zu gestatten, im Innern der Durchgangsbohrung (24) angeordnet ist.

3. Kreiselpumpe nach einem der vorhergehenden Ansprüche, **dadurch gekennzeichnet, dass** die Kupplung des viskostatischen Typs Medien umfasst, vorzugsweise Siliconöle oder jedenfalls Flüssigkeiten mit bestimmten elastohydrodynamischen Eigenschaften, die dafür ausgelegt sind, automatisch ihre Viskosität zu erhöhen, wenn die mit solchen Medien in Berührung stehenden Oberflächen im Verhältnis zueinander in Bewegung gesetzt werden oder ihre Eigentemperatur ändern.

## Revendications

1. Une pompe rotative comprenant :
- un moteur électrique comprenant un stator (1) et un rotor associé (2),
- des premiers moyens adaptés pour que ledit rotor (2) puisse engager un arbre rotatif (3),
- des seconds moyens adaptes pour qu'une portion d'extrémité dudit arbre rotatif puisse engager une turbine (4), **caractérisée en ce que** :
lesdits seconds moyens comprennent un couplage du type visco-statique qui utilise un bain d'un milieu approprié ayant des propriétés visco-statiques, lesdits seconds moyens comprenant:
- un élément creux de confinement sous la forme d'un renfoncement essentiellement scellé et cylindrique (20), qui est une partie intégrale de ladite turbine (4), ledit renfoncement (20) étant placé dans le moyeu de ladite turbine (4), et ouvert du coté de la turbine faisant face à l'arbre rotatif (3), dans le but de recevoir l'arbre rotatif (3),
- un élément d'entrainement ou de guidage (21), relié de manière rigide à la portion d'extrémité dudit arbre (3), et logé de manière glisser à l'intérieur dudit renfoncement cylindrique (20),
- un élément de fermeture (23) apte à fermer solidement l'ouverture dudit renfoncement cylindrique (20), et équipé d'un trou traversant (24) apte à être traversée par ledit arbre rotatif (3) en rotation par rapport au dit élément de fermeture (23),
- contiennent en outre un bain d'un milieu visco-statique injecté dans le jeu (22) fourni entre ledit élément d'entraînement ou de guidage (21) et ledit renfoncement cylindrique (20).

2. Pompe rotative selon la revendication 1, **caractérisée en ce qu'**un moyen de scellement de préférence un Joint torique (25), adapté pour permettre la rotation dudit arbre rotatif (3) par rapport au dit élément de fermeture (23), est disposé à l'intérieur dudit trou traversant (24),

3. Pompe rotative selon l'une quelconque des revendications précédentes, **caractérisée en ce que** ledit couplage du type visco-statique comprend des milieux, de préférence des huiles de silicone ou, en tout cas, des fluide ayant des propriétés élasto-hyrodynamiquas, adaptés pour augmenter automatiquement leur viscosité lorsque les surfaces en contact avec de tels milieux Sont mis en mouvement l'un par rapport à l'autre ou changent sur température propre.
